# EUROPÄISCHE PATENTSCHRIFT

(11) **EP 0 639 119 B1**
(45) Veröffentlichungstag und Bekanntmachung des Hinweises auf die Patenterteilung: **10.12.1997**
(21) Anmeldenummer: 94909100.3
(22) Anmeldetag: 02.03.1994
(51) Int. Cl.: B23Q 5/26, F15B 15/22

(54) **WERKZEUGMASCHINE**
MACHINE-TOOL
MACHINE OUTIL

(30) Priorität: 03.03.1993 DE 9303048 U
(43) Veröffentlichungstag der Anmeldung: 22.02.1995
(73) Patentinhaber: FESTO AG & Co, 73734 Esslingen (DE); CHIRON-WERKE GMBH & CO. KG, 78532 Tuttlingen (DE)
(72) Erfinder: STOLL, Kurt, D-73732 Esslingen (DE); PREUSSLER, Udo, D-70771 Leinfelden-Echterdingen (DE); GRUND, Peter, D-78647 Trossingen (DE)
(74) Vertreter: Abel, Martin, Dipl.-Ing.
(86) Internationale Anmeldenummer: EP9400601
(87) Internationale Veröffentlichungsnummer: WO9420260

(56) Entgegenhaltungen:
- EP-A- 0 033 689
- EP-A- 0 449 768
- DE-A- 1 931 593
- DE-A- 2 036 083
- DE-C- 3 506 180
- US-A- 2 893 354
- US-A- 3 191 505
- US-A- 3 724 331
- PATENT ABSTRACTS OF JAPAN vol. 1, no. 24 (M-12) 26. März 1977 & JP,A,51 138 979 (KUWABARA) 30. November 1976

## Beschreibung

Die Erfindung betrifft eine Werkzeugmaschine mit einem Spindelstock und zumindest einem Werkzeugwechsler, der Bearbeitungswerkzeuge zwischen einer Magazinposition und einer Arbeitsposition transportiert, wobei dem Werkzeugwechsler als Antriebseinheit zumindest ein fluidisch betätigbarer Arbeitszylinder mit einem Zylindergehäuse zugeordnet ist, in dem ein Kolben axial bewegbar angeordnet ist, zu dessen fluidischer Endlagendämpfung eine Dämpfungseinrichtung vorgesehen ist.

Eine Werkzeugmaschine der vorstehend genannten Art ist aus der EP 0 205 030 A2 bekannt.

Bei der bekannten Werkzeugmaschine hat der Kolben häufig wechselnd Bearbeitungswerkzeuge mit relativ geringem und relativ hohem Gewicht zu transportieren. Es leuchtet ein, daß in solchen Fällen die Einstellung der Dämpfungseinrichtung nur ein Kompromiß sein kann. Dies bedeutet aber, daß die Dämpfungs- bzw. Bremsintensität bei der Handhabung schwerer Gegenstände meist zu gering und bei der Handhabung leichter Gegenstände meist zu hoch ist. Um das Problem in den Griff zu bekommen, hat man daher auch schon versucht, eine zusätzliche Zuluftdrosselung im Bereich des zuströmseitigen Arbeitsraumes des Arbeitszylinders vorzunehmen, um über eine Regulierung des zuströmenden Druckmittels auf die Normalgeschwindigkeit einzuwirken und dadurch den Übergang zur Bremsbewegung zu beeinflussen. In der Praxis bereitet es jedoch erhebliche Mühe, die Einstellungen der Geschwindigkeits-Drosselventile und der Dämpfungsdrosseln zum Auffinden des optimalen Dämpfungsverhaltens aufeinander abzustimmen. Es hat sich gezeigt, daß in der Praxis nach meist nur wenigen Einstellversuchen der Bedienperson völlig ungeeignete Einstellwerte vorliegen, die keinem Einsatzzweck auch nur annähernd Rechnung tragen.

Bei bekannten Werkzeugmaschinen ist weiter von Nachteil, daß die Arbeitsventile und eventuelle weitere Vorsteuerventile getrennt an den Werkzeugmaschinen angeordnet werden müssen, so daß bei der Endmontage derartiger Werkzeugmaschinen ein großer Verkabelungsaufwand sowohl für die Pneumatik als auch für die Elektrik erforderlich ist.

Davon ausgehend ist es Aufgabe der vorliegenden Erfindung, eine Werkzeugmaschine der eingangs genannten Art zu schaffen, die vom Anwender ohne Spezialkenntnisse bei kompakter Bauweise rasch und problemlos an unterschiedliches Dämpfungsverhalten erfordernde Einsatzbedingungen angepaßt werden kann.

Diese Aufgabe wird erfindungsgemäß dadurch gelöst, daß dem Arbeitszylinder ein Einstellgerät zugeordnet ist, über das die Endlagendämpfung zwischen zumindest zwei Vorgaben umschaltbar ist.

Mit dem nunmehr bei der neuen Werkzeugmaschine vorhandenen Einstellgerät kann der Anwender vor Ort eine rasche Anpassung an unterschiedliche Einsatzbedingungen vornehmen. Bereits ab Werk läßt sich das Einstellgerät so auslegen, daß bei bestimmten unterschiedlichen Einsatzbedingungen des Arbeitszylinders, unter Berücksichtigung der Dämpfungsintensität bei der Bremsbewegung, ein optimaler Übergang von der Normalbewegung zur dämpfenden Bremsbewegung stattfindet. Entsprechend dem jeweiligen Belastungsfall ist das Einstellgerät lediglich in die zugeordnete Geschwindigkeits-Vorgabestellung umzuschalten. In den meisten Fällen wird es genügen, zwei Geschwindigkeits-Vorgabestellungen vorzusehen, die zum einen einen Bereich geringerer Belastung und zum anderen einen Bereich größerer Belastung abdecken.

Speziell auf dem Gebiet der Werkzeugmaschinen tritt häufig der Fall ein, daß die Arbeitszylinder hängend montiert werden und an der Kolbenstange abwechselnd Bearbeitungswerkzeuge mit geringerem und höherem Gewicht anzuordnen sind. In diesem Falle könnte man beispielsweise eine erste Geschwindigkeits-Vorgabestellung so wählen, daß der Gewichtsbereich zwischen 1,8 und 5 kg abgedeckt wird, während die zweite mögliche Geschwindigkeits-Vorgabestellung den Bereich zwischen 5 kg und 8 kg abdeckt. Natürlich können die Bereichsgrenzen von Fall zu Fall variieren und einander sogar überlappen. Bei der Handhabung geringer Gewichte wird man die Auslegung zweckmäßigerweise so treffen, daß die zugeordnete Geschwindigkeits-Vorgabestellung eine hohe Normalgeschwindigkeit ermöglicht, während man für den Transport schwerer Massen die Normalgeschwindigkeit durch die entsprechende Geschwindigkeits-Vorgabestellung reduziert, so daß jeweils ein aperiodischer Geschwindigkeitsverlauf beim Übergang in die Bremsbewegung zumindest im wesentlichen gewährleistet ist. Ein aufwendiges Einstellen eventueller Geschwindigkeits-Drosselventile und Dämpfungsdrosseln zum Auffinden des optimalen Dämpfungsverhaltens entfällt somit. Es versteht sich, daß das Einstellgerät von Fall zu Fall auch so ausgebildet sein kann, daß sich mehr als zwei Geschwindigkeits-Vorgabestellungen einstellen lassen.

Arbeitszylinder mit Dämpfungseinrichtungen sind als solches zum Beispiel aus der DE 34 27 690 A1 oder der DE 28 30 416 A1 bekannt. Ein Einstellgerät zum Umschalten zwischen verschiedenen Dämpfungsvorgaben ist dort allerdings nicht vorgesehen.

Aus der DE-A-20 36 083 geht eine Dämpfungsvorrichtung für Arbeitszylinder hervor, die über Schieber verfügt, die entsprechend ihrer jeweiligen Stellung eine unterschiedliche Drosselwirkung bezüglich des abströmenden Druckmittels hervorrufen. Allerdings ist kein Umschalten zwischen bestimmten Vorgaben möglich, sondern lediglich eine für jeden Einsatzfall erneut vorzunehmende stufenlose Justierung.

Bei der aus der US-A-2 893 354 bekannten Anordnung erfolgt eine wegabhängige Endlagendämpfung, die bei allen Einsatzbedingungen gleichbleibend arbeitet und ein Umschalten zwischen diskreten Vorgabewerten ebenfalls nicht ermöglicht.

Vorteilhafte Weiterbildungen der Erfindung sind in den Unteransprüchen aufgeführt.

Das Einstellgerät ist vorzugsweise an dem Arbeitszylinder montiert. Damit verbunden ist der Vorteil, daß der Arbeitszylinder mit montiertem Einstellgerät bereits vorkonfektioniert werden kann, so daß sich die Endmontage der neuen Werkzeugmaschine deutlich erleichtert. Es sind nicht verschiedene Druckmittel- und Elektroanschlüsse erforderlich, um die Verstellung der Endlagendämpfung zu bewirken.

Es ist durchaus möglich, bereits in den Abströmkanal eine auch als Fixdrossel bezeichenbare Festdrossel einzuschalten, die durch ihren Stömungswiderstand die maximal mögliche Normalgeschwindigkeit bestimmt, die für einen bestimmten Belastungsfall bzw. Gewichtsbereich bereits die optimalen Abströmwerte vorgibt. In diesem Fall wird man das Einstellgerät regelmäßig so auslegen, daß dessen Strömungswiderstand in der ersten Geschwindigkeits-Vorgabestellung maximal gleich und vorzugsweise kleiner als der Strömungswiderstand der Festdrossel ist. Der Strömungswiderstand des Einstellgerätes wirkt sich dann nicht oder nur unwesentlich aus. In der zweiten Geschwindigkeits-Vorgabestellung wird dann jedoch der Festdrossel ein dieser gegenüber größerer Strömungswiderstand des Einstellgerätes nachgeschaltet, so daß sich praktisch eine Reihenschaltung von Drosseln ergibt, wobei der maßgebliche Anteil an dem resultierenden Strömungswiderstand von dem vom Einstellgerät vorgegebenen Strömungswiderstand bestimmt wird.

Bei entsprechender Ausgestaltung kann das Einstellgerät bei beiden Hubrichtungen des Kolbens wirksam sein, indem es über entsprechende Abströmkanäle mit beiden Arbeitsräumen des Arbeitszylinders verbunden ist und für jeden Abströmkanal mindestens zwei Geschwindigkeits-Vorgabestellungen aufweist. Die Werte vom Einstellgerät verursachten Strömungswiderstände können dann bei beiden Hubrichtungen identisch oder, abhängig vom Anwendungsfall, unterschiedlich sein.

Das Umschalten des Einstellgerätes kann unmittelbar manuell erfolgen, indem am Einstellgerät entsprechende Betätigungsmittel vorhanden sind, die von Fall zu Fall von Hand manipulierbar sind. Ist das Einstellgerät unmittelbar an einem Arbeitszylinder angeordnet, so ist es jedoch zweckmäßig, eine ferngesteuerte Betätigung zu ermöglichen, damit nicht in den Arbeitsbereich des Arbeitszylinders hineingefaßt werden muß.

Es ist von Vorteil, das Einstellgerät direkt am Zylindergehäuse des Arbeitszylinders zu montieren und an diesem ergänzend ein Arbeitsventil anzubringen, das dem Einstellgerät wirkungsmäßig vorgeschaltet ist. Sowohl das Arbeitsventil als auch das Einstellgerät befinden sich zweckmäßigerweise am gleichen der beiden gegebenenfalls vorhandenen Gehäusedeckel, an dem des weiteren noch ein Installationsraum vorgesehen sein kann, in dem Mittel zur elektrischen Ansteuerung des Arbeitsventils und/oder des Einstellgerätes untergebracht sind. Auf diese Weise liegt praktisch ein integraler Arbeitszylinder vor, der eine äußerst kompakte fluidbetätigte Antriebseinheit bildet.

Nachfolgend wird die Erfindung anhand der beiliegenden Zeichnung näher erläutert. In dieser zeigen im einzelnen:
- Figur 1: eine erste Bauform einer Arbeitszylinder-Anordnung in schematischer Darstellung und im Längsschnitt gemäß Schnittlinie I-I aus Figur 2, wobei das Einstellgerät nicht gezeigt ist und wobei die zum Arbeitsventil führenden Zylinderkanäle teilweise nur angedeutet sind und in der praktischen Verwirklichung in anderem Anschlußmuster an das Arbeitsventil herangeführt sein können,
- Figur 2: eine Draufsicht auf die Arbeitszylinder-Anordnung aus Figur 1, wobei lediglich ein Endbereich des Arbeitszylinders gezeigt ist,
- Figur 3: einen Längsschnitt durch das in Figur 2 gezeigte Einstellgerät gemäß Schnittlinie III-III aus Figur 2, wobei schematisch der Anschluß an ein zur Betätigung des Arbeitszylinders vorgesehenes Arbeitsventil verdeutlicht wird, und
- Figur 4: eine mit der Arbeitszylinder-Anordnung ausgestattete Werkzeugmaschine.

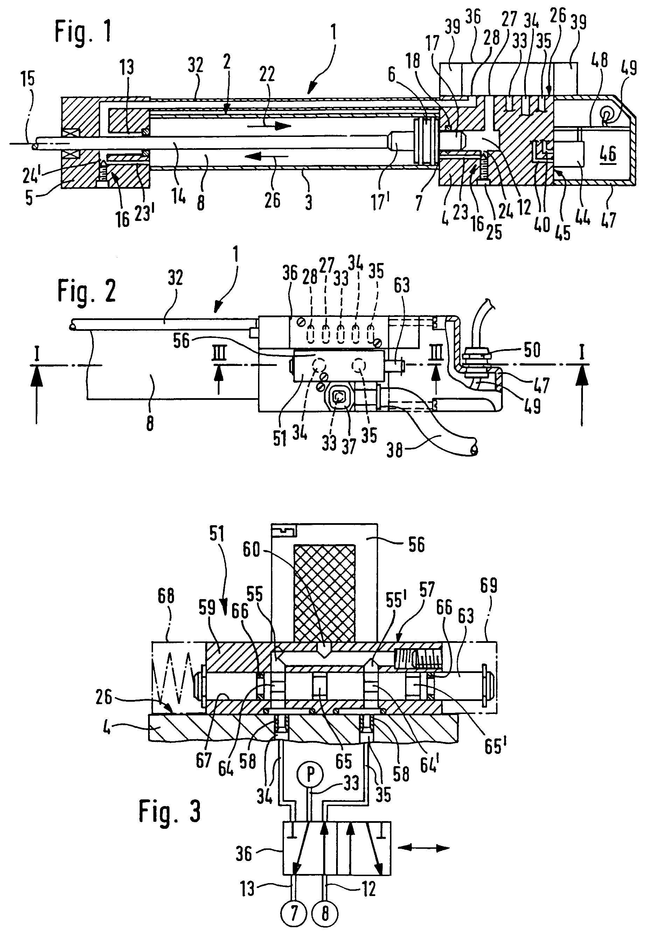

Aus Figuren 1 und 2 ist ein pneumatisch betätigbarer Arbeitszylinder 1 ersichtlich. Er verfügt über ein Zylindergehäuse 2 mit einem rohrförmigen Gehäuseabschnitt 3, an dessen beiden axialen Stirnseiten jeweils ein Zylinderdeckel oder Gehäusedeckel 4, 5 angeordnet ist. In dem rohrförmigen Gehäuseabschnitt 3 befindet sich ein axial hin und her beweglicher Kolben 6, der zwei Arbeitsräume 7, 8 dicht voneinander abteilt. In jeden Arbeitsraum 7, 8 mündet ein durch den zugeordneten Gehäusedeckel 4, 5 verlaufender Druckmittelkanal 12, 13, der eine Zufuhr und/oder Abfuhr eines fluidischen Druckmittels, insbesondere Druckluft, in den bzw. aus dem zugeordneten Arbeitsraum 7, 8 ermöglicht, um auf an sich bekannte Weise eine axial gerichtete Hubbewegung des Kolbens 6 zu verursachen.

Der Kolben 6 ist mit einer Kolbenstange 14 verbunden, die sich in Axialrichtung 15 erstreckt und zumindest, wie abgebildet, einen der Gehäusedeckel 4, 5 zur Außenseite hin durchsetzt. Am außerhalb des Zylindergehäuses 2 liegenden Kolbenstangenabschnitt lassen sich auf an sich bekannte Weise zu bewegende Lasten, beispielsweise Bearbeitungswerkzeuge, lösbar befestigen.

Im Betrieb des Arbeitszylinders 1 durchläuft der Kolben 6 bei jeder der beiden möglichen Hubrichtungen eine Normalbewegung mit Nenn- oder Normalgeschwindigkeit sowie eine Bremsbewegung mit bezüglich der Normalgeschwindigkeit reduzierter Kolbengeschwindigkeit. Die Bremsbewegung findet während des jeweils letzten Hubabschnittes statt, beginnend an einer bestimmten, nachfolgend als Bremsposition bezeichneten Kolbenposition, und endend bei Erreichen der jeweiligen Hubendlage, in der der Kolben 6 oder ein kolbenfestes Teil auf einen der Gehäusedeckel 4, 5 aufgelaufen ist. Eine dieser Hubendlagen ist in Figur 1 gezeigt. Während der Bremsbewegung wird der Kolben 6 abgebremst, man spricht hier auch von einer Endlagendämpfung. Hervorgerufen wird dies durch eine Dämpfungseinrichtung 16, die beispielsgemäß bei beiden Hubrichtungen wirksam und in das Zylindergehäuse 2, insbesondere in die beiden Gehäusedeckel 4, 5, integriert ist.

Die Dämpfungseinrichtung 16 hat für beide Hubrichtungen den gleichen Aufbau. Die Beschreibung beschränkt sich daher auf die in Figur 1 beim Einfahrhub wirksamen Mittel dieser Dämpfungseinrichtung. Zu diesen gehört zunächst ein mit dem Kolben mitbewegbar verbundenes Pufferungsteil 17, das kolbenähnlichen Aufbau hat und deshalb häufig auch als Pufferkolben bezeichnet wird. Es ragt ausgehend vom Kolben axial in Richtung des zugeordneten Gehäusedeckels 4, wobei es der Mündung des Druckmittelkanals 12 axial gegenüberliegt. In der Bremsposition beginnt das Pufferungsteil 17 in den Druckmittelkanal 12 einzutauchen, bei Erreichen der Hubendlage des Kolbens 6 ragt es weitestmöglich in den Druckmittelkanal 12 hinein. Sobald das Pufferungsteil 17 in den Druckmittelkanal 12 eintaucht, wird dessen dem zugeordneten Arbeitsraum 7 zugewandte Mündung dicht verschlossen. Zu diesem Zweck kann im Bereich der Kanalmündung ein Dichtring 18 vorgesehen sein, der das eingetauchte Pufferungsteil 17 umschließt.

Wenn der Kolben 6 seinen Einfahrhub gemäß Hubrichtung 22 ausführt, reduziert sich das Volumen des dem Pufferungsteil 17 zugeordneten Arbeitsraumes 7, wobei der Kolben 6 Druckmittel aus diesem Arbeitsraum 7 über den Druckmittelkanal 12 ausstößt. Wegen des relativ großen Querschnittes des Druckmittelkanals 12 kann die hierbei vorliegende Normalgeschwindigkeit des Kolbens 6 relativ hoch sein. Sobald jedoch die Mündung des Druckmittelkanals 12 vom Pufferungsteil 17 verschlossen ist, ist der Ausströmweg für das Druckmittel versperrt. Es kann jetzt nur noch über einen By-pass-Kanal 23 ausströmen, der die verschlossene Kanalmündung umgeht. Er ist einerseits ebenfalls zum Arbeitsraum 7 hin offen und mündet andererseits in einen tiefer liegenden Abschnitt des Druckmittelkanals 12, der von dem eingetauchten Pufferungsteil 17 nicht erreicht wird. Bei dem Bypass-Kanal 23 handelt es sich um einen Drosselkanal, das heißt, der von ihn zur Verfügung gestellte Strömungsquerschnitt ist um einiges geringer als derjenige, der üblicherweise von der offenen Mündung des Druckmittelkanals 12 zur Verfügung gestellt wird. Die Drosselungsintensität ist zweckmäßigerweise variabel einstellbar, zu welchem Zweck eine nachfolgend als Dämpfungsdrossel 24 bezeichnete Drosselstelle vorgesehen ist, die unter Mitwirkung einer nachfolgend als Dämpfungsschraube 25 bezeichneten Drosselschraube gebildet ist. Über die Einschraubtiefe dieser Dämpfungsschraube 25 läßt sich der Strömungswiderstand und damit die Drosselungsintensität verändern.

Da dem verdrängten Druckmittel ab Erreichen der Bremsposition nur noch der verringerte Querschnitt des By-pass-Kanals 23 zum Ausströmen zur Verfügung steht, wird die Bewegung des Kolbens 6 abgebremst. Die Bremsverzögerung hängt von der Einstellung der Dämpfungsdrossel 24 ab.

Beim Ausfahrhub gemäß Pfeil 26 findet mit Annäherung an die entsprechende Endlage ein entsprechender Dämpfungsvorgang statt. Die entsprechenden Mittel der Dämpfungseinrichtung 16 sind mit identischen, durch einen Strich erweiterten Bezugsziffern versehen.

Das soeben beschriebene Dämpfungsprinzip ist als solches bekannt und beispielsweise in der DE 34 27 690 A1 beschrieben, auf die hiermit ausdrücklich Bezug genommen wird.

Die beiden Druckmittelkanäle 12, 13 münden an ihren den Arbeitsräumen 7, 8 entgegengesetzten Enden an einer Montagefläche 26 des einen der Gehäusedeckel 4, 5 aus. Bevorzugt handelt es sich um den der Kolbenstange 14 abgewandten rückwärtigen Gehäusedeckel 4. Der eine Druckmittelkanal 12 verläuft hierzu direkt innerhalb dieses Gehäusedeckels 4 bis zur Mündung 27 an der Montagefläche 26. Der Druckmittelkanal 13 des anderen Gehäusedeckels 5 ist in einem Rohr 32 zu dem rückwärtigen Gehäusedeckel 4 zurückgeführt und endet ebenfalls in einer Mündung 28 in der Montagefläche 26. Der Druckmittelkanal 13 setzt sich also aus endseitigen Kanalabschnitten der Gehäusedeckel 4, 5 und einem mittleren, in dem Rohr 32 verlaufenden Kanalabschnitt zusammen. Das Rohr 32 erstreckt sich zweckmäßigerweise parallel zum rohrförmigen Gehäuseabschnitt 3 radial neben diesem, könnte aber auch einstückiger Bestandteil der Wandung des besagten Gehäuseabschnittes 3 sein.

Zu der Montagefläche 26 münden ferner ein Druckmittel-Zufuhrkanal 33 und zwei Abströmkanäle 34, 35. Sie sind wie die Druckmittelkanäle 12, 13 an ein Arbeitsventil 36 angeschlossen, das an der Montagefläche 26 des Gehäusedeckels 4 lösbar befestigt ist. Beispielsgemäß handelt es sich um ein 5/2-Wegeventil, dessen beiden Entlüftungsausgänge mit den Abströmkanälen 34, 35 kommunizieren, wobei sein Druckmitteleingang an den Druckmittel-Zufuhrkanal 33 angeschlossen ist und seine Arbeitsausgänge über die Mündungen 27, 28 mit den Druckmittelkanälen 12, 13 in Verbindung stehen.

Der Druckmittel-Zufuhrkanal 33 verläuft im Innern des Gehäusedeckels 5 und endet in einer am Gehäusedeckel 4 befestigten Anschlußeinrichtung 37, an die lösbar eine zu einer Druckmittelversorgung führende Druckmittelleitung 38 angeschlossen ist. Die Anschlußeinrichtung 37 befindet sich zweckmäßigerweise auf der gleichen Montagefläche 26 wie das Arbeitsventil 36, wobei es sich bei der Montagefläche 26 um eine im wesentlichen ebene seitliche Außenfläche des Gehäusedeckels 4 handeln kann.

Das Arbeitsventil 36 ist mit Betätigungseinrichtungen 39 ausgestattet, die insbesondere fluidisch angesteuert werden. Sie können insbesondere Betätigungskolben enthalten, die das Ventilglied des Arbeitsventils 36 verlagern können. Das fluidische Betätigungssignal wird zweckmäßigerweise über mindestens einen Steuerkanal 40 von mindestens einem Vorsteuerventil 44 übermittelt, das ebenfalls an dem Gehäusedeckel 4 befestigt und mittels elektrischer Signale betätigt wird. Als Vorsteuerventile 44 sind insbesondere Magnetventile vorgesehen. Sie sind zweckmäßigerweise an der dem rohrförmigen Gehäuseabschnitt 3 axial abgewandten Stirnseite 45 des Gehäusedeckels 4 befestigt, wobei sie zweckmäßigerweise in einem zur Umgebung hin abgeschlossenen Installationsraum 46 untergebracht sind, der sich beispielsgemäß unter einer abnehmbar an den Gehäusedeckel 4 angebrachten Schutzhaube 47 befindet. Dort kann auch eine elektrische Leiterplatte 48 untergebracht sein, an die die Vorsteuerventile elektrisch angeschlossen sind und die ihrerseits mit elektrischen Leitungen 49 kommuniziert, die unter Zwischenschaltung einer elektrischen Kupplung 50 nach außen zu einer Stromversorgung und/oder Steuereinrichtung geführt sind.

Am Zylindergehäuse 2 ist des weiteren ein Einstellgerät 51 insbesondere lösbar festgelegt. Sein Aufbau ist im einzelnen aus Figur 3 zu ersehen. Bevorzugt sitzt es ebenfalls an dem bereits das Arbeitsventil 36 und die Vorsteuerventile 44 tragenden Gehäusedeckel 4, wobei es zweckmäßigerweise an die bereits genannte Montagefläche 26 angeflanscht sein kann. Alle wesentlichen Bauelemente zur Ansteuerung des Arbeitszylinders 1 sind somit auf eine oder zwei Außenflächen des beim Ausführungsbeispiel quaderförmigen Gehäusedeckels 4 konzentriert. Dies eröffnet gute Zugangsmöglichkeiten im Servicefall.

Besagtes Einstellgerät 51 verfügt über zwei Einstellkanäle 55, 55', die einenends an der Unterseite des Einstellgerätes 51 ausmünden, mit der letzteres auf dem Zylindergehäuse 2 aufsitzt. Die zugeordneten Mündungen der Einstellkanäle stehen hierbei mit den oben erwähnten Abströmkanälen 34, 35 in Verbindung, die mit ihren dem Arbeitsventil 36 entgegengesetzten Endbereichen an dem für das Einstellgerät 51 vorgesehenen Bestückungsplatz der Montagefläche 26 ausmünden. Die Abströmkanäle 34, 35 können sehr kurz gehalten sein, da das Arbeitsventil 36 und das Einstellgerät 51 unmittelbar nebeneinander angeordnet sind.

Die beiden Einstellkanäle 55, 55' kommunizieren also eingangsseitig mit den Abströmkanälen 34, 35. Ausgangsseitig führen sie zu einem Schalldämpfer 56, der insbesondere an der Oberseite 57 des Einstellgerätes 51 an dieses angesetzt ist. Jedem Einstellkanal 55, 55' könnte ein eigener Schalldämpfer 56 zugeordnet sein. Zweckmäßig ist jedoch die gezeigte Ausführungsform mit einem gemeinsamen Schalldämpfer 56 für beide Einstellkanäle 55, 55', die im Innern des Einstellgerätes 51 endseitig sogar noch zusammengeführt sein können, so daß sie über einen gemeinsamen Ausgang 60 an der dem Gehäusedeckel 4 abgewandten Oberseite 57 ausmünden, wo sich unmittelbar der Schalldämpfer 56 anschließt.

Im Betrieb des Arbeitszylinders 1 wird die Druckmittelzufuhr und -abfuhr bezüglich der Arbeitsräume 7, 8 von dem Arbeitsventil 36 beeinflußt. In den beiden möglichen Schaltstellungen des Arbeitsventils 36 wird jeweils einem der Arbeitsräume 7, 8 Druckmittel zugeführt, so daß sich der Kolben 6 verschiebt und aus dem jeweils anderen Arbeitsraum 8, 7 Druckmittel verdrängt, das nun ebenfalls über das Arbeitsventil 36 in einen der beiden Abströmkanäle 34, 35 gelangt. Je nach Hubrichtung des Kolbens 6 gelangt also Druckmittel aus dem abströmseitigen Arbeitsraum in den einen der beiden Abströmkanäle 34, 35.

Das abströmende Druckmittel gelangt dann über den jeweiligen Abströmkanal 34, 35 in den zugeordneten Einstellkanal 55, 55' des Einstellgerätes 51 und von dort über den Schalldämpfer 26 an die Umgebung.

Die Hubgeschwindigkeit des Kolbens 6 während des ungedämpften Normalhubes wird beim Ausführungsbeispiel maßgeblich vom Strömungsquerschnitt des jeweiligen Abströmkanals 34, 35 bestimmt. Hierzu kann wie abgebildet in jedem der Abströmkanäle 34, 35 eine sogenannte Fix- oder Festdrossel 58 eingeschaltet sein, die zweckmäßigerweise von einem separaten, insbesondere düsenähnlich aufgebauten Drosselkörper gebildet ist, der fest in den jeweiligen Abströmkanal 34, 35 eingesetzt und insbesondere eingepreßt ist. Dadurch ergibt sich ein klar definierter Strömungswiderstand, und eventuelle Fertigungstoleranzen seitens der Kanäle im Gehäusedeckel 4, 5 spielen keine Rolle.

Das Einstellgerät 51 ist zwischen zwei Geschwindigkeits-Vorgabestellungen umschaltbar, in denen dem abströmenden Druckmittel unterschiedliche Strömungswiderstände entgegenstehen. Beim Ausführungsbeispiel sind zwei solcher Geschwindigkeits-Vorgabestellungen möglich. In der in Figur 3 abgebildeten ersten Geschwindigkeits-Vorgabestellung ist der dem abströmenden Druckmittel im jeweiligen Einstellkanal 55, 55' entgegenwirkende Strömungswiderstand erheblich geringer als der durch die Festdrosseln 58 verursachte. Das Einstellgerät 51 nimmt hier praktisch keinen Einfluß auf den abströmenden Volumenstrom. Schaltet man das Einstellgerät 51 jedoch in die nicht dargestellte zweite Geschwindigkeits-Vorgabestellung um, so erhöht sich der von den Einstellkanälen 55, 55' hervorgerufene Strömungswiderstand auf ein über dem Widerstand der Festdrosseln 58 liegendes Maß. Man erhält praktisch eine Reihenschaltung von jeweils einer gehäuseseitigen und einer geräteseitigen Drossel, wobei vor allem der verringerte Strömungsquerschnitt der Einstellkanäle 55, 55' dafür verantwortlich ist, daß im Vergleich zur ersten Geschwindigkeits-Vorgabestellung ein nur verringertes Volumen pro Zeiteinheit zum Schalldämpfer 56 ausströmen kann.

Da das aus den Arbeitsräumen 7, 8 verdrängte Druckmittel stets über das Einstellgerät 51 abströmt, ist dessen gewählte Geschwindigkeits-Vorgabestellung für die Normalgeschwindigkeit verantwortlich. Zwar sind die Strömungswiderstände des Einstellgerätes 51 auch bei der Bremsbewegung des Kolbens 6 wirksam, doch spielen sie hier, wenn überhaupt, eine nur untergeordnete Rolle, da der durch die Dämpfungsdrosseln 24, 24' hervorgerufene Strömungswiderstand erheblich größer ist und die Strömungswiderstände des Einstellgerätes 51 wie auch der Festdrosseln 58 überlagert.

Beim konkreten Ausführungsbeispiel verfügt das Einstellgerät 51 über ein Gehäuse 59, in dem ein Schieber 63 axial verstellbar gelagert ist. Bei diesem handelt es sich vorzugsweise um einen Kolbenschieber, der für jeden Einstellkanal 55, 55' zwei axial beabstandete Steuerpartien 64, 65; 64', 65' aufweist, also für jede Geschwindigkeits-Vorgabestellung pro Einstellkanal 55, 55' eine Steuerpartie. Beim Ausführungsbeispiel ist der Schieber 63 so angeordnet, daß er die beiden Einstellkanäle 55, 55' durchquert, und die Steuerpartien 64, 64'; 65, 65' sind von Partien unterschiedlichen Schieberquerschnittes gebildet, die durch Verstellen des Schiebers 63 in den Einstellkanälen 55, 55' positionierbar sind. Beispielsgemäß handelt es sich um ringnutartige Schiebereinschnitte mit unterschiedlicher Tiefe.

Beim Ausführungsbeispiel hat der Schieber 63 zwei mögliche Schieberstellungen, die den beiden Geschwindigkeits-Vorgabestellungen entsprechen. In der gezeigten ersten Schieberstellung fluchten die beiden ersten Steuerpartien 64, 64' mit den beiden Einstellkanälen 55, 55'. Nach dem Umschalten des Einstellgerätes 51 befinden sich die beiden zweiten Steuerpartien 65, 65' im Verlauf des jeweiligen Einstellkanals 55, 55'. Auf diese Weise läßt sich durch bloßes Ändern der Schieberstellung eine Veränderung der Durchströmquerschnitte der Einstellkanäle 55, 55' vornehmen und damit die Drosselungsintensität verändern.

Das beispielsgemäße Einstellgerät 51 hat einen sehr einfachen Aufbau und ist zur unmittelbaren manuellen Betätigung vorgesehen. Der Schieber 63 führt an entgegengesetzten Seiten aus dem Gerätegehäuse 59 heraus, wobei zur Abdichtung im Durchdringungsbereich zweckmäßigerweise Dichtringe 66 vorgesehen sind, die in eine Ringnut des Schiebers 63 oder der Schieber-Aufnahme 67 eingeknüpft sind. Die Schieberlänge ist so auf die Länge der Schieber-Aufnahme 67 abgestellt, daß der Schieber 63 in den beiden möglichen Schieberstellungen mit einem Endabschnitt an der einen oder anderen Stirnseite der Schieber-Aufnahme 67 hinausragt. Indem man von Hand auf das hinausragende Ende des Schiebers 63 Druck ausübt, läßt er sich leicht von der einen in die andere Schieberstellung verlagern.

Eine komfortablere Bedienung ist natürlich möglich, wenn sich das Einstellgerät 51 ferngesteuert umschalten läßt. Zu diesem Zweck kann ein pneumatischer Betätigungskolben und eine Rückstellfeder vorgesehen sein. Man wird die Anordnung dann z. B. so treffen, daß sich das Einstellgerät in der Ausgangsstellung unter Einwirkung der Rückstellfeder in der Einstellung zum Abdämpfen kleiner Massen befindet, die beim Ausführungsbeispiel der in Figur 3 gezeigten ersten Geschwindigkeits-Vorgabestellung entspricht. Über ein pneumatisches Drucksignal läßt sich das Einstellgerät dann in die zweite Geschwindigkeits-Vorgabestellung umschalten, welches Drucksignal einen mit dem Schieber verbundenen Betätigungskolben beaufschlagt. Beim Ausführungsbeispiel ist eine Bauvariante einer entsprechenden Weiterbildung strichpunktiert angedeutet. Man erkennt am einen Ende der Schieber-Aufnahme 67 eine Rückstelleinrichtung 68 und am anderen Ende eine Betätigungseinrichtung 69, die den nicht näher dargestellten Betätigungskolben enthält. Die fluidische Ansteuerung der Betätigungseinrichtung 69 erfolgt zweckmäßigerweise über ein Vorsteuerventil, das wie die Vorsteuerventile 44 für das Arbeitsventil 36 in dem Installationsraum 46 untergebracht sein kann.

Im Zusammenhang mit Werkzeugmaschinen sind Arbeitszylinder häufig mit vertikal ausgerichteter Kolbenstange montiert. Je nach Gewicht des von der Kolbenstange zu transportierenden Gegenstandes, in der Regel ein Bearbeitungswerkzeug, ergeben sich bei gleichbleibendem Betriebsdruck im Regelfall unterschiedliche Normalgeschwindigkeiten des Kolbens.

Über das Einstellgerät 51 kann nun die Normalgeschwindigkeit dem jeweiligen Belastungsfall angepaßt werden, so daß sich jeweils ein optimaler Übergang von der regulären in die gedämpfte Bewegungsphase ergibt.

Es versteht sich, daß man das Einstellgerät auch so auslegen kann, daß es lediglich bei einer Hubrichtung wirksam ist.

Es ist ferner darauf hinzuweisen, daß bei einem in beiden Hubrichtungen wirksamen Einstellgerät 51 die den einzelnen Einstellkanälen 55, 55' zugeordneten Strömungsquerschnitte unterschiedlich ausgebildet sein können, so daß man vor allem bei vertikalem Einbau des Arbeitszylinders 1 den unterschiedlichen Einflüssen der Schwerkraft auf die Kolbengeschwindigkeit Rechnung tragen kann.

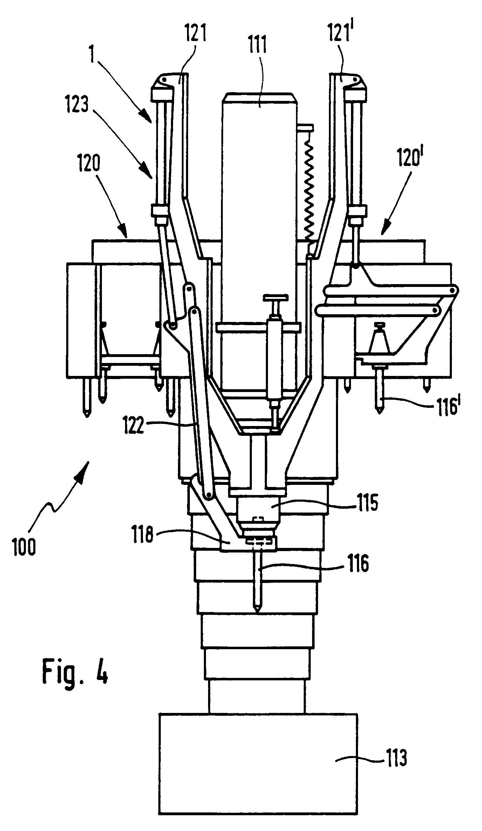

Der beschriebene Arbeitszylinder 1 läßt sich vielfältig einsetzen. Ein bevorzugter, jedoch nicht ausschließlicher Anwendungsfall ist sein Einsatz als Antriebseinheit für den Werkzeugwechsler einer Werkzeugmaschine. In Figur 4 ist dieser Anwendungsfall in einer bevorzugten Ausgestaltung näher illustriert. Im einzelnen ist dort mit 100 eine Werkzeugmaschine mit einem Spindelstock 111 gezeigt, der auf einem Sockel 113 angeordnet ist. In einen Spindelkopf 115 ist ein Bearbeitungswerkzeug 116 eingesetzt, das von einem Halter 118 eines insgesamt mit 120 bezeichneten Werkzeugwechslers gehalten ist. Der Werkzeugwechsler 120 weist ein starres Teil 121 auf, an dem gelenkig ein Parallelogrammgestänge 122 befestigt ist, das wiederum den Halter 118 trägt. Zwischen dem starren Teil 121 und dem Parallelogrammgestänge 122 ist als Antriebseinheit 123 der im Zusammenhang mit den Figuren 1 bis 3 bereits näher beschriebene Arbeitszylinder 1 angeordnet.

Wenn sich die Antriebseinheit 123 im ausgefahrenen Zustand befindet, wie dies in Figur 4 links gezeigt ist, so befindet sich das Bearbeitungswerkzeug 116 in seiner Arbeitsposition. Der Werkzeugmaschine 100 ist zumindest ein weiterer Werkzeugwechsler 120' zugeordnet, der in Figur 4 rechts dargestellt ist und ein Bearbeitungswerkzeug 116' trägt, das sich in seiner Magazinposition befindet.

Obwohl die beiden Werkzeugwechsler 120 und 120' identisch aufgebaut sind, können die Bearbeitungswerkzeuge 116 und 116' deutlich unterschiedliche Gewichte aufweisen. Wegen des direkt am Zylindergehäuse des Arbeitszylinders 1 montierten Einstellgerätes 51, das in Figur 4 nicht gezeigt ist, kann der Arbeitszylinder 1 rasch an die jetzt unterschiedlichen Einsatzbedingungen angepaßt werden, wie dies eingangs bereits ausführlich beschrieben wurde. Dadurch, daß das Einstellgerät am Arbeitszylinder angeordnet ist, ergibt sich eine kompakte Bauweise, die die Montage der Werkzeugmaschine 100 erleichtert. Es ist keine zusätzliche äußere Beschaltung oder Montage von weiteren Einheiten erforderlich, um die Anpassung der Dämpfung an unterschiedliche Gewichte der Bearbeitungswerkzeuge zu erzielen.

## Patentansprüche

1. Werkzeugmaschine (100) mit einem Spindelstock (111) und zumindest einem Werkzeugwechsler (120), der Bearbeitungswerkzeuge (116) zwischen einer Magazinposition und einer Arbeitsposition transportiert, wobei dem Werkzeugwechsler (120) als Antriebseinheit (123) zumindest ein fluidisch betätigbarer Arbeitszylinder (1) mit einem Zylindergehäuse (2) zugeordnet ist, in dem ein Kolben (6) axial bewegbar angeordnet ist, zu dessen fluidischer Endlagendämpfung eine Dämpfungseinrichtung vorgesehen ist, dadurch gekennzeichnet, daß dem Arbeitszylinder (1) ein Einstellgerät (51) zugeordnet ist, über das die Endlagendämpfung zwischen zumindest zwei Vorgaben umschaltbar ist.

2. Werkzeugmaschine nach Anspruch 1, dadurch gekennzeichnet, daß das Einstellgerät (51) an dem Arbeitszylinder (1) montiert ist.

3. Werkzeugmaschine nach Anspruch 1 oder 2, dadurch gekennzeichnet, daß das Arbeitsprinzip der Dämpfungseinrichtung (16) auf einer ab einer bestimmten Kolbenposition erfolgenden Erhöhung der entgegen der momentanen Hubrichtung auf den Kolben einwirkenden Fluidkraft basiert, was eine Bremsbewegung mit im Vergleich zur vorausgehenden Normalgeschwindigkeit reduzierter Kolbengeschwindigkeit hervorruft.

4. Werkzeugmaschine nach einem der Ansprüche 1 bis 3, dadurch gekennzeichnet, daß das Einstellgerät (51) mit einem Abströmkanal (34, 35) kommuniziert, der mit einem abströmseitigen Arbeitsraum (7, 8) des Arbeitszylinders (1) derart verbunden oder verbindbar ist, daß aus diesem abströmseitigen Arbeitsraum (7, 8) abströmendes Druckmittel über das Einstellgerät (51) abströmt, wobei das Einstellgerät (51) zwischen mindestens zwei Geschwindigkeits-Vorgabestellungen umschaltbar ist, in denen dem abströmenden Druckmittel unterschiedliche Strömungswiderstände entgegenstehen, die jeweils sowohl bei der mit Normalgeschwindigkeit ablaufenden Normalbewegung als auch bei der Bremsbewegung des Kolbens (6) wirksam sind.

5. Werkzeugmaschine nach einem der Ansprüche 1 bis 4, dadurch gekennzeichnet, daß die Endlagendämpfung durch eine Reduzierung des für das aus dem abströmseitigen Arbeitsraum (7, 8) von dem Kolben (6) verdrängte Druckmittel zur Verfügung stehenden Ausströmquerschnittes hervorgerufen wird.

6. Werkzeugmaschine nach einem der Ansprüche 1 bis 5, dadurch gekennzeichnet, daß das Einstellgerät (51) unmittelbar manuell und/oder ferngesteuert unter Vermittlung mindestens einer mit dem Einstellgerät (51) zusammenarbeitenden und insbesondere an dem Einstellgerät (51) angeordneten Betätigungseinrichtung (68) umschaltbar ist.

7. Werkzeugmaschine nach einem der Ansprüche 1 bis 6, dadurch gekennzeichnet, daß das Einstellgerät (51) einen verstellbaren Schieber (63) aufweist, der zum Erhalt der einzelnen Geschwindigkeits-Vorgabestellungen in unterschiedlichen Schieberstellungen positionierbar ist.

8. Werkzeugmaschine nach Anspruch 7, dadurch gekennzeichnet, daß das Einstellgerät (51) einen mit dem Abströmkanal (34, 35) verbundenen Einstellkanal (55, 55') aufweist, in den der Schieber zwischengeschaltet ist, so daß das abströmende Druckmittel den Schieber (63) passiert, wobei der Schieber (63) für die einzelnen Geschwindigkeits-Vorgabestellungen unterschiedliche Steuerpartien (64, 64'; 65, 65') aufweist, die nacheinander im Bereich des Einstellkanals (55, 55') positionierbar sind und verschieden große Durchströmquerschnitte für den Einstellkanal (55, 55') hervorrufen.

9. Werkzeugmaschine nach Anspruch 8, dadurch gekennzeichnet, daß der Schieber (63) ein Kolbenschieber ist, bei dem die Steuerpartien (64, 64'; 65, 65') von Partien unterschiedlichen Schieberquerschnittes insbesondere in Gestalt unterschiedlich tiefer Umfangsnuten gebildet sind.

10. Werkzeugmaschine nach einem der Ansprüche 1 bis 9, dadurch gekennzeichnet, daß direkt an dem Einstellgerät (51) ein Schalldämpfer (56) angeordnet ist, durch den das über das Einstellgerät (51) abströmende Druckmittel geleitet wird.

11. Werkzeugmaschine nach Anspruch 10 in Verbindung mit Anspruch 8 oder 9, dadurch gekennzeichnet, daß der Schalldämpfer (56) an den dem Abströmkanal (34, 35) entgegengesetzten Endbereich des jeweiligen Einstellkanals (55, 55') angeschlossen ist.

12. Werkzeugmaschine nach einem der Ansprüche 1 bis 11, dadurch gekennzeichnet, daß das Einstellgerät (51) gleichzeitig mit zwei Abströmkanälen (34, 35) kommuniziert, die mit jeweils einem der beiden vom Kolben (6) abgeteilten Arbeitsräume (7, 8) des Arbeitszylinders (1) verbunden oder verbindbar sind, wobei jede Geschwindigkeits-Vorgabestellung gleichzeitig die Strömungswiderstände für beide Hubrichtungen (22, 26) des Kolbens (6) festlegt.

13. Werkzeugmaschine nach Anspruch 12, dadurch gekennzeichnet, daß in dem Einstellgerät (51) zwei Einstellkanäle (55, 55') vorgesehen sind, die eingangsseitig jeweils mit einem der beiden Abströmkanäle (34, 35) kommunizieren.

14. Werkzeugmaschine nach Anspruch 13, dadurch gekennzeichnet, daß die beiden Einstellkanäle (55, 55') über einen gemeinsamen Ausgang (60) am Einstellgerät (51) verfügen, an den zweckmäßigerweise ein Schalldämpfer (56) angeschlossen ist.

15. Werkzeugmaschine nach einem der Ansprüche 4 bis 14, dadurch gekennzeichnet, daßin dem Abströmkanal (34, 35) eine Festdrossel (58) vorgesehen ist, wobei der von dieser hervorgerufene Strömungswiderstand betragsmäßig zwischen zwei vom Einstellgerät (51) vorgebbaren Strömungswiderständen liegt.

16. Werkzeugmaschine nach einem der Ansprüche 1 bis 15, dadurch gekennzeichnet, daß das Einstellgerät (51) integraler Bestandteil des Zylindergehäuses (2) ist.

17. Werkzeugmaschine nach einem der Ansprüche 1 bis 16, dadurch gekennzeichnet, daß das Einstellgerät (51) mit seiner Unterseite an den Arbeitszylinder (1) angesetzt ist und an seiner Oberseite (57) einen Schalldämpfer (56) trägt.

18. Werkzeugmaschine nach einem der Ansprüche 1 bis 17, dadurch gekennzeichnet, daß am Arbeitszylinder (1), insbesondere neben dem Einstellgerät (51), ein Arbeitsventil (36) angeordnet ist, mit dem die einerseits mit dem Einstellgerät (51) kommunizierenden Abströmkanäle (34, 35) andererseits verbunden sind, wobei die Abströmkanäle (34, 35) zweckmäßigerweise im Innern des Zylindergehäuses (2) verlaufen.

19. Werkzeugmaschine nach Anspruch 18, dadurch gekennzeichnet, daß das Arbeitsventil (36) ein 5/2-Wegeventil ist, dessen beiden Entlüftungsausgänge mit den Abströmkanälen (34, 35) und dessen beiden Arbeitsausgänge mit den Arbeitsräumen (7, 8) kommunizieren, wobei sein Druckmitteleingang mit einem im Innern des Zylindergehäuses (2) verlaufenden Druckmittel-Zufuhrkanal (33) kommuniziert, der zu einer am Zylindergehäuse (2) festgelegten Anschlußeinrichtung (37) für mindestens eine Druckmittelleitung führt.

20. Werkzeugmaschine anch Anspruch 18 oder 19, dadurch gekennzeichnet, daß am Zylindergehäuse (2) mindestens ein elektrisch betätigbares Vorsteuerventil (44) angeordnet ist, das über im Innern des Zylindergehäuses (2) verlaufende Kanäle (40) mit dem Arbeitsventil (36) kommuniziert und das insbesondere in einem bei Bedarf zu öffnenden Installationsraum (46) des Arbeitszylinders (1) untergebracht ist, der noch weitere Mittel zur elektrischen Ansteuerung des Arbeitszylinders (1) und insbesondere des Einstellgerätes (51) aufweisen kann.

## Claims

1. Machine tool (100) with a headstock (111) and one or more tool changers (120) for transferring machining tools between a magazine position and a working position, wherein the tool changer (120) is assigned as drive unit (123) one or more fluid-actuable operating cylinders (1) with a cylinder housing (2) in which an operating piston (6) is mounted with axial movement facility and with a damping device provided for its fluidic end-position damping, characterized in that the operating cylinder (1) is assigned a setting device, through which the end-position damping may be switched between at least two presettings.

2. Machine tool according to claim 1, characterized in that the setting device (51) is mounted on the operating cylinder (1).

3. Machine tool according to claim 1 or 2, characterized in that the working principle of the damping device (16) is based on an increase in the fluid force acting on the piston against the momentary direction of stroke after a defined piston position, which generates a braking movement with reduced piston velocity relative to the preceding normal velocity.

4. Machine tool according to any of claims 1 to 3, characterized in that the setting device (51) communicates with an outflow passage (34, 35) which is connected or connectable to an outflow-side working space (7, 8) of the operating cylinder (1), that pressure medium flowing out of this outflow-side working space (7, 8) flows out via the setting device (51), with the setting device (51) being switchable between at least two velocity presettings, in which the outflowing pressure medium is subject to differing flow resistances, which are effective for both the normal movement proceeding at normal velocity and also for the braking movement of the piston (6).

5. Machine tool according to any of claims 1 to 4, characterized in that the end-position damping is generated by a reduction in the outflow cross-section available for the pressure medium displaced by the piston from the outflow-side working space (7, 8).

6. Machine tool according to any of claims 1 to 5, characterized in that the setting device (51) is switchable directly manually and/or by remote control through the agency of one or more actuating devices (68) working in conjunction with the setting device (51) and in particular mounted on the setting device (51).

7. Machine tool according to any of claims 1 to 6, characterized in that the setting device (51) has an adjustable slide (63) which may be positioned in various slide positions to obtain the individual velocity presettings.

8. Machine tool according to claim 7, characterized in that the setting device (51) has a setting passage (55, 55') connected to the outflow passage (34, 35), in which the slide is interposed, so that the outflowing pressure medium passes the slide (63), with the slide (63) having different control sections (64, 64'; 65, 65') for the individual velocity presettings, which may be positioned consecutively in the area of the setting passage (55, 55') and generate flow cross-sections of varying size in the setting passage (55, 55').

9. Machine tool according to claim 8, characterized in that the slide (63) is a piston slide, in which the control sections (64, 64'; 65, 65') are formed by sections of varying slide cross-section in particular in the form of circumferential grooves of varying depth.

10. Machine tool according to any of claims 1 to 9, characterized in that a sound absorber (56), through which the pressure medium flowing out via the setting device (51) is directed, is mounted directly on the setting device (51).

11. Machine tool according to claim 10 in conjunction with claim 8 or 9, characterized in that the sound absorber is connected to the end section of the respective setting passage (55, 55') opposite the outflow passage (34, 35).

12. Machine tool according to any of claims 1 to 11, characterized in that the setting device (51) communicates simultaneously with two outflow passages (34, 35), each connected or connectable to one of the two working spaces (7, 8) divided by the piston (6), while each velocity presetting simultaneously gives the flow resistances for both directions of stroke (22, 26) of the piston (6).

13. Machine tool according to claim 12, characterized in that two setting passages (55, 55') are provided in the setting device (51), each communicating on the input side with one of the two outflow passages (34, 35).

14. Machine tool according to claim 13, characterized in that the two setting passages (55, 55') have a common outlet (60) on the setting device (51), to which a sound absorber is expediently connected.

15. Machine tool according to any of claims 4 to 14, characterized in that a fixed restrictor (58) is provided in the outflow passage (34, 35), with the amount of flow resistance which it generates lying between two flow resistances presettable by the setting device (51).

16. Machine tool according to any of claims 1 to 15, characterized in that the setting device (51) is an integral constituent of the cylinder housing (2).

17. Machine tool according to any of claims 1 to 16, characterized in that the underside of the setting device (51) is placed on the operating cylinder (1), while its top side (57) supports a sound absorber (56).

18. Machine tool according to any of claims 1 to 17, characterized in that mounted on the operating cylinder (1), in particular next to the setting device (51), is an operating valve (36) to which the outflow passages (34, 35) communicating with the setting device (51) at one end are connected at the other end, with the outflow passages (34, 35) expediently running inside the cylinder housing (2).

19. Machine tool according to claim 18, characterized in that the operating valve (36) is a 5/2-way valve, the two vent outlets of which communicate with the outflow passages (34, 35), while its two operating outlets communicate with the working spaces (7, 8), and its pressure medium inlet communicates with a pressure medium supply duct (33) running inside the cylinder housing (2) and which leads to a connection device (37), fixed to the cylinder housing (2), for one or more pressure medium lines.

20. Machine tool according to claim 18 or 19, characterized in that one or more electrically-actuable pilot valves (44) is mounted on the cylinder housing (2) and communicates via passages running inside the cylinder housing (2) with the operating valve (36), and is in particular accommodated in an installation space (46) of the operating cylinder (1) for opening as required nd which may have further devices for electrical control of the operating cylinder (1) and in particular of the setting device (51).

## Revendications

1. Machine-outil (100) avec poupée porte-broche (111) et au moins un changeur d'outil (120), qui transporte des outils d'usinage (116) entre une position de magasin et une position de travail, au changeur d'outil (120) étant associé en tant qu'unité d'entraînement (123) au moins un cylindre de travail (1) actionnable par un fluide avec un corps de cylindre (2), dans lequel un piston (6) est monté mobile axialement, un dispositif d'amortissement étant prévu pour l'amortissement par fluide de sa position de fin de course, caractérisée en ce qu'au cylindre de travail (1) est associé un dispositif de réglage (51), par lequel l'amortissement vers la position de fin de course est commutable entre au moins deux consignes.

2. Machine-outil selon la revendication 1, caractérisée en ce que le dispositif de réglage (51) est monté sur le cylindre de travail (1).

3. Machine-outil selon la revendication 1 ou 2, caractérisée en ce que le principe de travail du dispositif d'amortissement (16) repose sur une augmentation, s'effectuant à partir d'une position déterminée du piston, de la force du fluide agissant sur le piston à l'encontre du sens momentané de la course, ce qui provoque un mouvement de freinage avec vitesse de piston réduite par rapport à la vitesse normale précédente.

4. Machine-outil selon l'une des revendications 1 à 3, caractérisée en ce que le dispositif de réglage (51) communique avec un canal d'évacuation (34, 35), qui est relié ou peut être relié avec une chambre de travail (7, 8) côté évacuation du cylindre de travail (1), de manière que du fluide sous pression, s'écoulant à partir de cette chambre de travail (7, 8) côté évacuation, s'écoule en passant par le dispositif de réglage (51), le dispositif de réglage (51) étant commutable entre au moins deux positions de vitesse de consigne, dans lesquelles au fluide sous pression s'écoulant s'opposent des résistances d'écoulement différentes, qui opèrent chacune lors du déplacement normal se déroulant à la vitesse normale ainsi que lors du mouvement de freinage du piston (6).

5. Machine-outil selon l'une des revendications 1 à 4, caractérisée en ce que l'amortissement de la position de fin de course est provoqué par une réduction de la section de sortie disponible pour le fluide sous pression chassé par le piston (6) de la chambre de travail (7, 8) côté évacuation.

6. Machine-outil selon l'une des revendications 1 à 5, caractérisée en ce que le dispositif de réglage (51) est commutable, pour être commandé directement manuellement et/ou télécommandé, par l'intermédiaire d'au moins un dispositif d'actionnement (68) coopérant avec le dispositif de réglage (51) et placé en particulier sur ce dispositif de réglage (51).

7. Machine-outil selon l'une des revendications 1 à 6, caractérisée en ce que le dispositif de réglage (51) comporte un tiroir (63) réglable, qui peut être positionné dans différentes positions de tiroir pour obtenir les différentes positions de vitesse de consigne.

8. Machine-outil selon la revendication 7, caractérisée en ce que le dispositif de réglage (51) comporte un canal de réglage (55, 55') relié au canal d'évacuation (34, 35), dans lequel est intercalé le tiroir, de sorte que le fluide sous pression s'écoulant traverse le tiroir (63), ce tiroir (63) présentant des parties de commande différentes (64, 64' ; 65, 65') pour les différentes positions de vitesse de consigne, lesquelles parties sont positionnables l'une après l'autre dans la région du canal de réglage (55, 55') et provoquent des sections de passage de grandeurs différentes pour le canal de réglage (55, 55').

9. Machine-outil selon la revendication 8, caractérisée en ce que le tiroir (63) est un tiroir à piston dans lequel les parties de commande (64, 64' ; 65, 65') sont formées par des parties de tiroir de section différentes, en particulier sous la forme de rainures périphériques de profondeurs différentes.

10. Machine-outil selon l'une des revendications 1 à 9, caractérisée en ce que, directement sur le dispositif de réglage (51), est placé un amortisseur de bruit (56), à travers lequel est envoyé le fluide sous pression s'écoulant par le dispositif de réglage (51).

11. Machine-outil selon la revendication 10 dépendante de la revendication 8 ou 9, caractérisée en ce que l'amortisseur de bruit (56) est raccordé à la zone d'extrémité, opposée au canal d'évacuation (34, 35), du canal de réglage (55, 55') respectif.

12. Machine-outil selon l'une des revendications 1 à 11, caractérisée en ce que le dispositif de réglage (51) communique en même temps avec deux canaux d'évacuation (34, 35), qui sont reliés ou peuvent être reliés chacun avec l'une des deux chambres de travail (7, 8), séparées par le piston (6), du cylindre de travail (1), chaque position de vitesse de consigne définissant en même temps les résistances à l'écoulement pour les deux sens de course (22, 26) du piston (6).

13. Machine-outil selon la revendication 12, caractérisée en ce que dans le dispositif de réglage (51) sont prévus deux canaux de réglage (55, 55'), qui communiquent côté entrée chacun avec l'un des deux canaux d'évacuation (34, 35).

14. Machine-outil selon la revendication 13, caractérisée en ce que les deux canaux de réglage (55, 55') comportent une sortie (60) commune sur le dispositif de réglage (51), à laquelle est avantageusement raccordé un amortisseur de bruit (56).

15. Machine-outil selon l'une des revendications 4 à 14, caractérisée en ce que dans le canal d'évacuation (34, 35) est prévu un organe d'étranglement fixe (58), la résistance à l'écoulement, provoquée par celui-ci, se situant, en ce qui concerne sa valeur, entre deux résistances à l'écoulement imposables par le dispositif de réglage (51).

16. Machine-outil selon l'une des revendications 1 à 15, caractérisée en ce que le dispositif de réglage (51) fait partie intégrante du corps de cylindre (2).

17. Machine-outil selon l'une des revendications 1 à 16, caractérisée en ce que le dispositif de réglage (51) est placé avec sa face inférieure contre le cylindre de travail (1) et porte un amortisseur de bruit (56), sur sa face supérieure (57).

18. Machine-outil selon l'une des revendications 1 à 17, caractérisée en ce que sur le cylindre de travail (1), en particulier à côté du dispositif de réglage (51), est disposée une vanne de travail (36), avec laquelle les canaux d'évacuation (34, 35), communiquant d'une part avec le dispositif de réglage (51), sont reliés d'autre part, les canaux d'évacuation (34, 35) s'étendant avantageusement à l'intérieur du corps de cylindre (2).

19. Machine-outil selon la revendication 18, caractérisée en ce que la vanne de travail (36) est une vanne de distribution à 5/2 voies, dont les deux sorties de désaération communiquent avec les canaux d'évacuation (34, 35) et dont les deux sorties de travail communiquent avec les chambres de travail (7, 8), son entrée de fluide sous pression communiquant avec un canal d'alimentation de fluide sous pression (33), s'étendant à l'intérieur du corps de cylindre (2), et menant à un dispositif de branchement (37) pour au moins une conduite de fluide sous pression, fixé sur le corps de cylindre (2).

20. Machine-outil selon la revendication 18 ou 19, caractérisée en ce que sur le corps de cylindre (2) est placée au moins une vanne pilote (44) actionnable électriquement, qui communique avec la vanne de travail (36), par des canaux (40) s'étendant à l'intérieur du corps de cylindre (2) et qui est logée en particulier dans une chambre réceptrice (46), à ouvrir au besoin, du cylindre de travail (1), qui peut comporter encore d'autres moyens pour la commande électrique du cylindre de travail (1) et en particulier du dispositif de réglage (51).
